# EUROPEAN PATENT SPECIFICATION

(11) **EP 1 083 008 B1**
(45) Date of publication and mention of the grant of the patent: **02.04.2003**
(21) Application number: 99500159.1
(22) Date of filing: 08.09.1999
(51) Int. Cl.: B07C 5/342, B07C 5/18

(54) **Conveyor system for sorting according to weight and optical properties**
Fördersystem zur Sortierung nach Gewicht und optischen Eigenschaften
Système convoyeur de tri en fonction du poids et des propriétés optiques

(43) Date of publication of application: 14.03.2001
(73) Proprietor: FOOD MACHINERY ESPANOLA S.A., E-46012 Valencia (ES)
(72) Inventor: Sanchez de Leon Rodriguez Roda, Juan Antonio, 46012 Valencia (ES)
(74) Representative: Flaccus, Rolf-Dieter, Dr.

(56) References cited:
- EP-A- 0 273 313
- US-A- 5 267 654

## Description

The purpose to which the invention that protects this patent refers consists of a fruit and vegetable conveyor for classification by weight and electro-optical parameters.

It consists of a continuous monorail conveyor whose transporting elements of the fruit or vegetables facilitates the successive and uninterrupted performance of the following functions:
a) Unit weighing of each piece of fruit
b) Its suitable positioning with the longitudinal axis (peduncular) transversally arranged in the direction that the conveyor advances
c) Continuous rotation of the fruit in the direction and at the ideal speed so that all its surface can be seen when it passes through the field of vision of the electro-optical parameter detection cameras
d) Coordinated regulation of the advance speeds of the conveyor and rotation of the fruit so that said visualization can be completely produced with the best performance of the transport
e) Unmistakable identification of each piece of fruit according to its characteristics so that it can its unloading can be put in order in the corresponding point, according to the preestablished classification
f) Automatic unloading in the adequate place, by means of overturning the transporting element

### HISTORY

In the field of transporting fruit and vegetables for classification according to their physical characteristics, numerous methods with different ideas and purposes are known.

Thus, for example, there are those that exclusively use mechanical means (pairs of rollers of variable distance, nets, divergent flex, etc.), which are limited to classifying by diameter, give rise to knocks that damage the fruit and do not facilitate statistical information.

Electronic classifying conveyors are also known, with weight detecting cups that are supplied by a biconic roller elevator on which an electro-optical system is installed to detect the parameters.

These conveyors have problems in transferring the fruit from the biconic feeder to the weight detecting cup, as it limits the speed (and, as a result, the performance) of the set and, furthermore, it has to be very precise in order to correlate the identification of each piece of fruit in the biconic feeder and in the weighing cup so that the central computer can decide without error the corresponding unloading point.

Finally, monorail electronic classifiers are also known, in which the elements that carry and subsequently unload the fruit in the suitable place are coupled to a longitudinal transporting chain, without causing a transfer amongst the transport means in the interval between the weighing and the optical parameter detection of the fruit.

Some conveyors of this type which are able to weigh are shaped in such a way that the fruit passes underneath the optical parameter detector cameras, propelled by biconic pairs that make it turn so that the greatest part of the surface comes into the field of vision of the cameras.

The arrangement of the conveyor when loading occurs throughout the transporting chain according to the sequence bicone-fruit-bicone-fruit, etc., underneath which there a fruit ejecting system that operates when the fruit passes through the suitable unloading point.

The size of the fruit to be classified is limited by this type of conveyor, both as regards its maximum diameter (due to the separation between the axes of every two consecutive bicones So that the pieces of fruit housed in each one do not touch each other) and its minimum diameter (so that the pieces are completely rotated under the cameras).

A conveyor of this type is known e.g. from US-A-5 267 654, with respect to which claim 1 has been delimited.

### DESCRIPTION OF THE INVENTION

The aim of the invention purpose of this patent consists in the elimination of the known disadvantages characteristic of the conveyors for classifying fruit, described above, and has been conceived and designed taking into account this priority purpose.

To this effect, the elements and functional means described below have been designed, which develop the functions conferred to them in said descriptions, according to the following detail:
- Weighing function: The conveying element of the fruit is composed of two bicones joined by a conveying frame that, during a section of its advance course, slides on guides that transmit the weight of the fruit-carrying set to charge cells which record it and send it to the central computer.

The set formed by the two bicones and the conveying frame are engaged in the transporting chain by means of an anchoring part that has two projections that slide into a groove, thus permitting that the set has a degree of freedom of movement in the vertical direction which facilitates elevation of the set as the frame slides along the guides, transmitting the stress to the charge cells on which it rests.

The weight of each piece of fruit is obtained by means of a tare prior to the different weight components of the fruit carrying element (guides, frame, bicones), filtering of the signal and its electronic analysis.
- Rotating function: The bicones are revolving to make the fruit that rests on them turn, so that the entire surface is shown to the optical parameter detection cameras.

The turning speed is variable and able to be regulated, as the bicones have a polished surface at their ends which rest on motor belts, preferably trapezium, which make them turn due to friction and the lineal speed of which is controlled electronically.

Consequently, the turning speed and direction of the bicones depend on the relation between the lineal advance speeds of the motor belts and the support chain of the bicones and may be voided when these are equal.

Control of the turning speed of the bicones is very important, as by means of this compliance with other functions is obtained, such as:
- Positioning function: In general, it is of interest that the turning axis of the fruit coincides with its peduncular axis (ideal line that joins the peduncle and the barycenter) and that this is transversally positioned in the advance direction of the conveying element.

With this arrangement, the peduncle or calyx of the fruit remains on one side of the field of vision of the cameras so that it is not confused with a superficial defect (stain, knocking, etc.)

The required positioning is achieved by making the fruit turn at the suitable speed by means of regulating the turning speed of the bicones.
- Visualization function: The lineal advance speed of the transporting chain has to be combined with the turning speed of the bicones in order to achieve that the fruit makes a 360° turn within the field of vision of the cameras and, therefore, that these completely see its surface.
- Identification function: For correct classification, it is required that each piece of fruit is unmistakably identified by its physical characteristics (weight, sizes, superficial optics).

At the same time, it is required that each piece of fruit occupies a conveying element for this singularity, that is, that it is positioned between each pair of bicones joined by a frame. This is obtained by means of an adjusted supply (in the region of 80% of the maximum capacity of the conveyor) and regulation of the speed and turning direction of the bicones.
- Unloading function: The conveying elements formed by each pair of bicones and its frame can be optionally tilted from one side to another of the transporting chain by means of displacing a support ramp operated by an electromagnet at the corresponding unloading point for its classification, according to the characteristics of the fruit, obeying the signal issued by the control computer.

### BRIEF DESCRIPTION OF THE FIGURES

The following figures complement the description of the invention and facilitate the interpretation of its formal, structural and functional characteristics, in which different aspects of a preferred performance of a fruit and vegetable conveyor, for classification by weight and electro-optical parameters and which constitutes the purpose of this patent, are schematically represented.

In said figures:

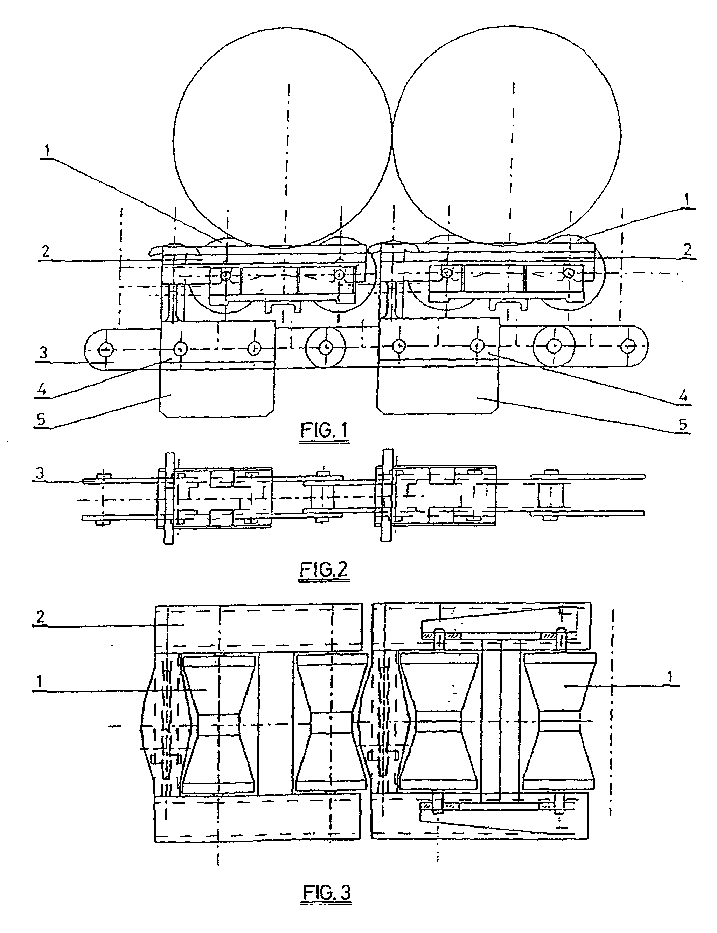

Figure 1 represents, on a side elevation, two carrying elements (sets of two bicones and a frame), each one loaded with a piece of fruit and embedded in the transporting chain.
Figure 2 shows, on a floor view, the transporting chain with the parts than anchor the carrying sets.
Figure 3 shows, on a floor view, the two carrying sets of figure 1, unloaded, unset and separated from the transporting chain, showing the carrying frame that joins the two bicones.

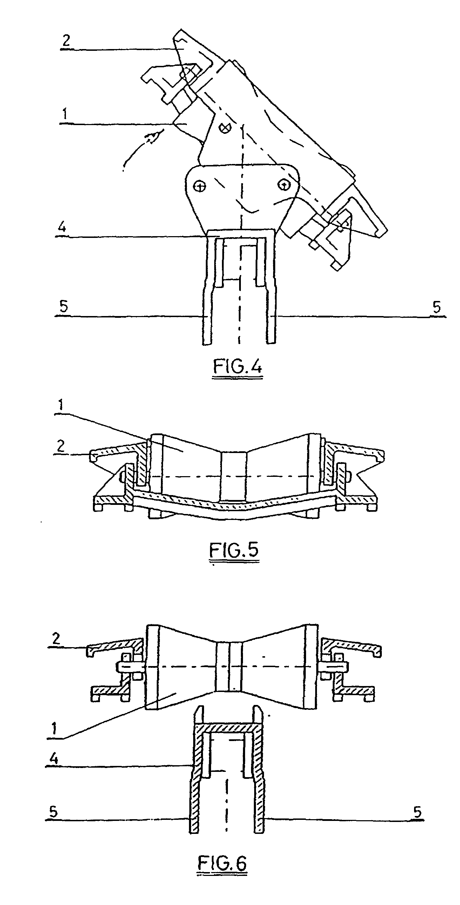

Figure 4 is a front elevation view of a complete bicone, with the part anchored to the transporting chain, tilted for lateral unloading of the carried fruit. Unloading may be carried out, alternatively, towards the opposite side of the chain, with no more than adopting the symmetrical axis as the turning axis, as shown in the upper part of the anchoring element.
Figure 5 shows a front elevation view of a bicone without the anchoring element and representing the carrying frame sectioned.
Figure 6 is a front elevation of a bicone, showing the sectioned frame and the arrangement of the branches projecting out of the anchoring element to the transporting chain.

### DESCRIPTION OF A PREFERRED PERFORMANCE

In order to clearly show the nature and scope of the advantageous application of the fruit and vegetable conveyor for classification by weight and electro-optical parameters that constitute the purpose of this invention, the following is a description of its structure and operation. Reference is made to the figures that, on representing a preferred performance of said object for information purposes, should be considered in their widest sense and not limiting of the application and content of the invention, the scope of which being defined by the set of appended claims.

The conveyor is of the monorail type consisting of elements that carry the fruit and unload in the suitable point which are coupled to a continuous longitudinal transporting chain made up of turning biconic rollers that make the fruit turn so that all its surface is shown before the optical parameter detecting cameras.

The conveying element of the fruit is composed of two bicones (1) joined by a carrying frame (2), forming a set that is embedded in the transporting chain (3) by means of anchoring element (4) that has two projections (5) which slide in a groove, giving the set certain freedom of movement in the vertical direction.

This displacement capacity facilitates that, on the frame (2) sliding along guides in a section of its advance path, these guides transmit the weight of the fruit conveying set to charge cells.

On previously knowing the tare of the different components of the weight of the fruit carrying element (guides, frame, bicones), these cells issue a signal which, after being filtered and electronically analyzed, records the weight of each piece of fruit.

The turning bicones (1) of the carrying element have a polished surface at their ends which rest on motor belts, preferably trapezium, which make them turn due to friction and the lineal speed of which is controlled electronically.

The turning speed and direction of the bicones depend on the relation between the lineal advance speeds of the belts and the transporting chain (3) by which, through their regulation the movements of the bicones (1) are controlled and on which the following depend: complete visualization of the surface of the fruit by the optical parameter detecting cameras; unmistakable identification of each piece of fruit; and the preferential choice of the peduncular axis of the fruit as the rotation axis, as well as its correct positioning in the transversal direction as regards the advance direction of the transporting chain.

Once the nature and functional scope of the invention have been described, as well as a preferred way of putting it into practice, it is recorded that in said invention the materials, forms, sizes and, in general, all accessory or secondary characteristics that do not alter, change or modify its main aspects may be variable. This is included in the following claims.

## Claims

1. Fruit and vegetable conveyor for classification due to weight and electro-optical parameters, of the monorail type, including the elements that carry the fruit and unload it at the suitable place, coupled to a continuous longitudinal transporting chain (3) made up of turning biconic rollers (1) that make the fruit turn so that its surface is presented before the optical parameter detecting cameras, the fruit-carrying element being composed of two bicones (1) joined by a carrying frame (2) which form a set, **characterized in that** said set is embedded in the transporting chain (3) by means of an anchoring part (4) that has two projections (5) that slide into a groove, thus permitting that the set has a degree of freedom of movement in the vertical direction which facilitates elevation of the set as the frame slides along the guides, transmitting the stress to the charge cells on which it rests, these cells, on previously knowing the tare of the different weight components of the fruit carrying element (guides, frame, bicones), issuing a signal which, after being filtered and electronically analyzed, records the weight of each piece of fruit.

2. Fruit and vegetable conveyor for classification by weight and electro-optical parameters, according to claim 1, **characterized in that** the turning bicones (1) of the carrying element have a polished surface at their ends that rest on motor belts, preferably trapezium, which make them turn due to friction and the lineal speed of which is controlled electronically, so that the turning speed and direction of the bicones (1) depend on the relation between the lineal advance speeds of the belts and the transporting chain (3) through which, by means of their regulation, the movements of the bicones (1) are controlled and on which the following depend: complete visualization of the surface of the fruit by the optical parameter detecting cameras; unmistakable identification of each piece of fruit; and the preferential choice of the peduncular axis of the fruit as the rotation axis, as well as its correct positioning in the transversal direction as regards the advance direction of the transporting chain.

## Patentansprüche

1. Obst- und Gemüseförderer des Einschienen-Typs für die Klassifizierung nach Gewicht und elektro-optischen Parametern, umfassend Elemente, welche die Früchte tragen und an einem geeigneten Ort ausladen, mit einer in Längsrichtung verlaufenden Endlos-Transportkette (3) gekoppelt sind und sich aus sich drehenden doppelkonischen Rollen (1) zusammensetzen, welche die Früchte in eine Drehbewegung versetzen, so dass ihre Oberfläche den zur Aufnahme der optischen Parameter dienenden Kameras präsentiert wird, wobei das die Frucht tragende Element zwei durch einen Tragrahmen (2) verbundene Doppelkegel (1) umfasst, die eine Einheit bilden, **dadurch gekennzeichnet, dass** diese Einheit in die Transportkette (3) eingebettet ist, und zwar mittels eines Verankerungsteiles (4), welches zwei Vorsprünge (5) aufweist, die in einer Nut gleiten, womit sie es ermöglichen, dass die Einheit einen Grad an Bewegungsfreiheit in der vertikalen Richtung aufweist, welcher das Anheben der Einheit erleichtert, wenn der Rahmen entlang den Führungen läuft, wobei er die Belastung auf die Wägezellen, auf welchen er ruht, überträgt und diese Zellen, denen vorher die Tara der verschiedenen Gewichtskomponenten des die Frucht tragenden Elementes (Führungen, Rahmen, Doppelkegel) bekannt ist, ein Signal ausgeben, das nach seiner Filterung und elektronischen Analyse, das Gewicht jeder einzelnen Frucht registriert.

2. Obst- und Gemüseförderer für die Klassifizierung nach Gewicht und elektro-optischen Parametern gemäß Anspruch 1, **dadurch gekennzeichnet, dass** die sich drehenden Doppelkegel (1) des Tragelementes eine polierte Oberfläche aufweisen, und zwar an deren Enden, welche auf Motorriemen ruhen, die vorzugsweise trapezförmig sind, wobei die Motorriemen die Doppelkegel durch Reibung in Drehung versetzen und ihre lineare Geschwindigkeit elektronisch gesteuert wird, so dass die Drehgeschwindigkeit und die Richtung der Doppelkegel (1) von der Beziehung zwischen den linearen Vorlaufgeschwindigkeiten der Riemen und der Transportkette (3) abhängig sind, durch welche, mittels ihrer Regulierung, die Bewegungen der Doppelkegel (1) gesteuert werden und von denen das Folgende abhängig ist: die vollständige Visualisierung der Oberfläche der Frucht durch die zur Aufnahme der optischen Parameter dienenden Kameras; eindeutige Identifizierung jeder einzelnen Frucht; und die bevorzugte Wahl der Stengel-Achse der Frucht als Rotationsachse, sowie deren richtige Positionierung in transversaler Richtung zur Vorlaufrichtung der Transportkette.

## Revendications

1. Convoyeur de fruits et légumes pour le tri en fonction du poids et des paramètres électro-optiques, du type monorail, comprenant les éléments qui transportent le fruit et le déchargent à l'emplacement approprié, accouplé à une chaîne transporteuse longitudinale continue (3) constituée de rouleaux biconiques tournants (1) qui font tourner le fruit afin que sa surface soit présentée devant les caméras de détection des paramètres optiques, l'élément porteur de fruit étant composé de deux bicônes (1) reliés par un cadre porteur (2) qui forment un ensemble, **caractérisé en ce que** ledit ensemble est encastré dans la chaîne transporteuse (3) au moyen d'une pièce d'ancrage (4) qui a deux saillies (5) coulissant dans une rainure, permettant ainsi à l'ensemble d'avoir un degré de liberté de mouvement dans la direction verticale qui facilite le soulèvement de l'ensemble à mesure que le cadre glisse sur les guides, transferrant la contrainte aux cellules de charge sur lesquelles il repose, ces cellules, en connaissant antérieurement la tare des différents composants de pesage de l'élément porteur de fruit (guides, cadre, bicônes), délivrant un signal qui, après avoir été filtré et analysé électroniquement, enregistrent le poids de chaque fruit.

2. Convoyeur de fruits et légumes pour le tri en fonction du poids et des paramètres électro-optiques selon la revendication 1, **caractérisé en ce que** les bicônes tournants (1) de l'élément porteur ont une surface polie à leurs extrémités qui reposent sur des courroies motorisées, de préférence trapézoïdales, qui les font tourner en raison du frottement et dont la vitesse linéaire est sous contrôle électronique, afin que la vitesse de rotation et la direction des bicônes (1) soient fonction de la relation entre les vitesses d'avance linéaire des courroies et la chaîne transporteuse (3) au moyen desquelles, à l'aide de leur régulation, les mouvements des bicônes (1) sont contrôlés et sur lesquels ce qui suit est fonction : visualisation complète de la surface du fruit par les caméras de détection des paramètres optiques, identification claire de chaque fruit, et le choix préférentiel de l'axe pédonculaire du fruit comme axe de rotation, ainsi que son positionnement correct dans la direction transversale en ce qui concerne le sens d'avance de la chaîne transporteuse.
